Europäisches Patentamt

European Patent Office

Office européen des brevets

(11) Veröffentlichungsnummer: **0 299 422**
**A2**

(12) **EUROPÄISCHE PATENTANMELDUNG**

(21) Anmeldenummer: 88111113.2

(22) Anmeldetag: 12.07.88

(51) Int. Cl.⁴: **G01N 21/35 , G02B 21/00**

(30) Priorität: 16.07.87 DE 3723480

(43) Veröffentlichungstag der Anmeldung:
**18.01.89 Patentblatt 89/03**

(84) Benannte Vertragsstaaten:
**AT BE CH DE FR GB IT LI LU NL SE**

(71) Anmelder: **Kernforschungsanlage Jülich**
**Gesellschaft mit beschränkter Haftung**
**Postfach 1913**
**D-5170 Jülich 1(DE)**

(72) Erfinder: **Blob, Albrecht K.**
**Lochnerstrasse 26**
**D-5100 Aachen(DE)**

(54) **Verfahren und Vorrichtung zur mikroanalytischen Bestimmung von organisch chemischem Material und dafür geeigneter Mikroskopaufsatz und Monochromator.**

(57) Eine mikrophotometrische Bestimmung von organisch chemischem Material, insbesondere von Kohlenwasserstoffen kann mit relativ einfachen Mitteln mit einem Mikroskopphotometer erreicht werden, indem man die Absorption aufgrund der CH-Schwingungen bei 1600 bis 1800 nm bzw. NH-Schwingungen bei 1400 bis 1600 nm mißt, die zwar relativ schwach sind, aber aufgrund eines hohen Signal/Rauschverhältnisses der Messung zugrundegelegt werden können. Ein für die Messung brauchbares Mikroskopphotometer umfaßt eine entsprechend im nahen Infrarot von $\lambda > 1000$ nm (NIR) durchlässige Optik und eine photometrische Meßeinrichtung mit rauscharmem NIR-Detektor sowie eine Lichtquelle mit hoher Leistungsdichte im NIR. Der Monochromator wird vorzugsweise durch ein Interferenzfilter mit einem Duchlaßmaximum senkrecht zum Strahlengang bei ca. 1800 nm, ca. 2000 nm oder ca. 1600 nm sowie mittlerer Bandbreite von $\leq 20$ nm, insbesondere 10 nm gebildet, dessen Winkel im Strahlengang zwischen 0 und 90° geändert werden kann, insbesondere mittels eines 5-Phasen-Schrittmotors mit einer Schrittfolge von ca. 1000 Schritt/Umdrehung. Für eine empfindliche Messung dient eine Intensitätsmodulation mittels eines Lichtchoppers oder einer Wellenlängenmodulation mit Hilfe des Interferenzfilters zusammen mit einem in Lock-In-Technik betriebenen Detektor.

FIG. 1

EP 0 299 422 A2

## Verfahren und Vorrichtung zur mikroanalytischen Bestimmung von organisch chemischem Material und dafür geeigneter Mikroskopaufsatz und Monochromator

Die Erfindung bezieht sich auf ein Verfahren zur photometrischen Bestimmung von organisch-chemischem Material in Mikrobereichen von $\geq 5$ $\mu m$ Meßfleckgröße einer Probe, durch Absorptionsmessung in einem Mikroskopphotometer in Transmission oder Reflexion sowie auf ein dafür geeignetes Mikroskopphotometer bzw. einen dafür geeigneten Mikroskopaufsatz und besonders zweckmäßigen Monochromator.

Die ortsauflösende Ermittlung der chemischen Beschafenheit ist in einer Vielzahl von Fällen von großem Interesse. Im Bereich der anorganischen Chemie haben sich bereits eine Vielzahl von elementspezifischen Mikrosonden für qualitative und quantitative Analysen etabliert. Im Bereich der organischen Chemie besteht dagegen ein erheblicher Nachholbedarf an ortsauflösenden Analysenmethoden, obwohl sich diverse Anwendungsfälle anbieten, wie der Kontaminationsnachweis in der Halbleiterfertigung, Probleme bei der Kunstfaser- und Folienherstellung sowie der Bereich der Forensik und der Erdölexploration.

Bekannt ist bereits eine ortsauflösende Infrarotspektroskopie, für die Fourier-Transform-Infra- Rot- (FTIR)-Geräte in Verbindung mit Spiegelmikroskopzusätzen angeboten werden, mit denen eine ortsauflösende Analyse in Mikrobereichen möglich ist, wobei allerdings ein Meßfleckdurchmesser von typischerweise ca. 50 $\mu m$ und hohe Gerätekosten in Kauf genommen werden müssen.

Ferner gibt es (etwa doppelt so teure) Laser-Raman-Mikrosonden, mit denen ähnliche Informationen bei Spotgrößen von minimal 1 $\mu m$ erhalten werden können, allerdings nur von nichtfluoreszierendem Probenmaterial, das trotz der hohen lokalen Strahlenbelastung keine photochemischen Veränderungen erleidet.

Der breitgestreute Einsatz so teurer Geräte in Bereichen mit begrenzter Aufgabenstellung, wie z. B. der Untersuchung des Abdecklacks (bzw. von Lackresten) auf Siliciumwafern in der Halbleiterindustrie, Homogenitätsüberprüfung von Kunststoffisolierfolien, Identitätskontrolle von Kunststoffbeschichtungen auf Verpackungsmaterialen, Menge des aliphatischen Kohlenstoffs in Erdölmuttergesteinen, verbietet sich weitgehend von selbst.

Der Erfindung liegt daher die Aufgabe zugrunde, ein mit sehr viel geringerem Aufwand zu realisierendes Verfahren für eine ortsauflösende Bestimmung von organisch-chemischem Material, insbesondere von Kohlenwasserstoffen, vorzusehen, das für zahlreiche Fragestellungen einsetzbar ist.

Das zu diesem Zweck entwickelte erfindungsgemäße Verfahren der eingangs genannten Art ist dadurch gekennzeichnet, daß man die Absorption mit hoher Rauschunterdrückung im Wellenlängenbereich von 1600 bis 1800 nm und/oder 1400 bis 1600 nm ermittelt.

Es hat sich nämlich gezeigt, daß Lichtmikroskope mit Glaslinsenbestückung, insbesondere aber solche mit Quarzlinsenbestückung, bis ins nahe Infrarot von $\lambda > 1000$ nm (NIR) transparent sind. In diesem Spektralbereich absorbieren Kohlenwasserstoffe wegen Kombinations-und Obertönen von C-H-Schwingungen bei Wellenlängen zwischen 1600 und 1800 nm, insbesondere 1640 bis 1800 nm, so daß diese Absorption für die analytische Bestimmung ausgenutzt werden kann. Daneben sind Absorptionen im N-H-Schwingungsbereich von 1400 bis 1600 nm, insbesondere 1450 bis 1580 nm für analytische Zwecke ausnutzbar. Die Meßfleckgröße liegt dabei über etwa 5 $\mu m$, insbesondere bei etwa 25 $\mu m$ und größer.

Um die NIR-Absorptionen für den analytischen Nachweis befriedigend ausnutzen zu können, ist eine besonders gute Rauschunterdrückung zweckmäßig, da die NIR-Absorptionen relativ schwach sind (etwa um den Faktor 20 schwächer als die Absorptionen im mittleren IR). Bei einem ausreichend hohen Signal/Rauschverhältnis kann jedoch die NIR-Absorptionsmessung vergleichbar gute Ergebnisse oder sogar noch bessere liefern.

Wesentlich sind die spektrale Leistungsdichte der Lichtquelle im NIR, die z. B. durch Halogenlampen befriedigend gewährleistet werden kann und die hohe Empfindlichkeit des Detektors, der vorzugsweise im Wechsellichtbetrieb bzgl. Intensität oder Wellenlänge in Verbindung mit Lock-In-Technik betrieben wird.

Zwar sind Mikroskopphotometer an sich bereits bekannt (siehe DE-OSen 26 28 551 und 27 42 957), ihr Einsatz und spezielle Anpassung für die Bestimmung von organischem Material, insbesondere in der Kohlepetrographie wurde jedoch bislang nicht in Erwägung gezogen.

Grundsätzlich ist eine Vorrichtung zur Durchführung des erfindungsgemäßen Verfahrens durch einen der Ermittlung von NIR-Absorptionen angemessenen Monochromator gekennzeichnet, der als Zusatz zu einem Lichtmikroskop im Strahlengang vor oder hinter dem Objekttisch angeordnet ist, sowie einen NIR-Detektor am bildseitigen Ausgang des Mikroskops sowie eine Meßfeldblende und vorzugsweise eine Intensitäts- oder Wellenlängenmodulation, speziell bei wechselstromempfindlichen Detektoren, die zusammen mit frequenz-und phasenempfindlicher Signalverstärkung in Lock-In-Technik für eine besonders bevorzugte Erhöhung des Signal/Rauschverhältnisses geeignet sind.

Als Monochromator wird insbesondere ein angepaßtes Interferenzfilter mit Einrichtungen zur Veränderung seines Winkels im Strahlengang zwischen 0 und 90° vorgesehen. Ein solcher Monochromator kann besonders klein ausgeführt werden, wenn er in der Bildebene oder einer dazu konjugierten Ebene angeordnet wird. Bei Stellung senkrecht zum Strahlengang sollte das Durchlaßmaximum insbesondere bei 1800 nm (für C-H-Absorptionsmessungen) oder bei 1600 nm (für N-H-Absorptionsmessungen) liegen und die Bandbreite ≤ 20 nm sein und insbesondere ca. 10 nm ausmachen. Zusätzlich kann auch die Absorption im O-H-Schwingungsbereich von 1900 - 1950 nm mit einem entsprechenden Filter mit Durchlaßmaximum bei ~ 2000 nm wahrgenommen werden.

Weitere Besonderheiten gehen aus den Patentansprüchen und der nachfolgenden Beschreibung von Ausführungsbeispielen unter Bezugnahme auf die angefügten Zeichnungen hervor; es zeigen schematisch:

Fig. 1 - 3 erfindungsgemäß ausgerüstete Lichtmikroskope;

Fig. 4 ein Schaltschema für die Versorgung und Steuerung der erfindungsgemäßen Elemente zur NIR-Absorptionsmessung mit der Signalverarbeitung bzw. -verstärkung und -ausgabe;

Fig. 5 Interferenzfilter-Durchlaßkurven für unterschiedliche Winkelstellungen des Filters relativ zum Strahlengang;

Fig. 6 eine Absorptionskurve für Tasmanales-Algen;

Fig. 7 und 8 zwei unterschiedliche Filterdrehanordnungen; und

Fig. 9 Kurven für die relative Extinktion von Copolymeren aus Styrol und rein aliphatischem Monomeren mit unterschiedlichen Styrolanteilen.

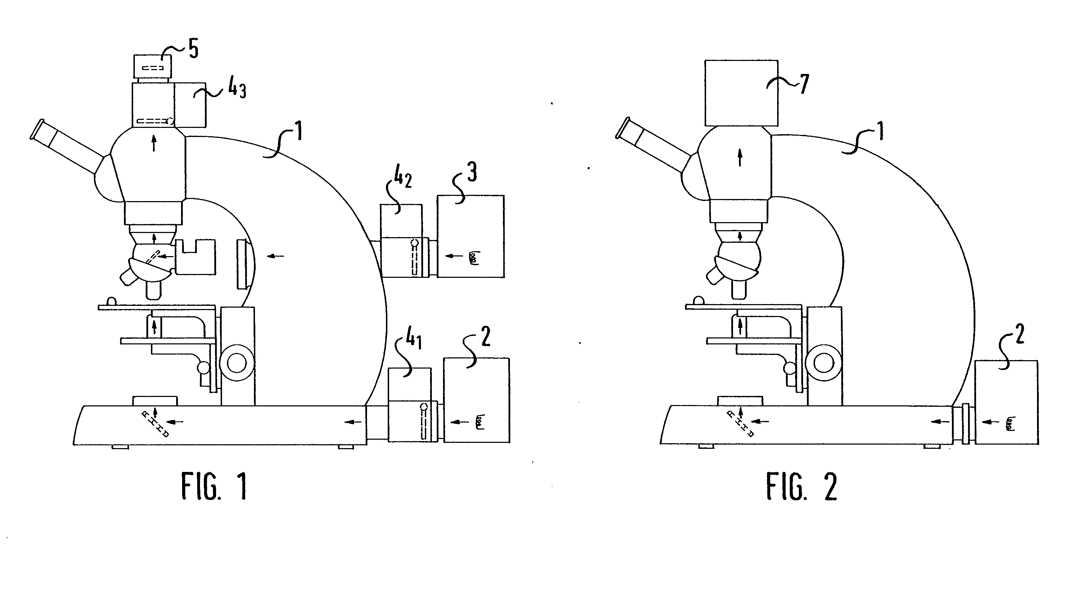

Gemäß Figur 1 ist ein handelsübliches Mikroskop 1, z. B. der Firma Carl Zeiss, mit einer Halogenlampe 2 für Transmissionsstrahlengang und 3 für Auflicht-Mikroskopie versehen. Ein Monochromator 4 für die gewünschten NIR-Meßbereiche kann entweder direkt vor der jeweiligen Halogenlampe ($4_1$ und $4_2$) vorgesehen sein oder in Stellung $4_3$ am Kamera- bzw. Photometerausgang. An diesem Ausgang sitzt abschließend ein NIR-Detektor 5, der insbesondere durch einen peltiergekühlten PbS-Detektor oder irgendeinen anderen rauscharmen NIR-Detektor gebildet werden kann. Der als Beispiel genannte PbS-Detektor benötigt pulsierenden Lichtstrom, weshalb insbesondere zusammen mit dem Monochromator ein (nicht näher gezeigter) Chopper (Lichtzerhacker) vorgesehen wird, der an allen 3 Monochromatorpositionen vorgesehen sein kann oder auch unmittelbar zusammen mit dem Detektor. Dieser Chopper ist für die bevorzugte Arbeitsweise in Lock-In-Technik nützlich, mit der besonders zweckmäßige Signal/Rauschverhältnisse erzielt werden können (wie weiter unten näher angegeben ist). Eine Intensitätsmodulation kann ggf. auch mittels einer entsprechend geeigneten Beleuchtungsquelle (z. B. Xe-Lampe) durch Modulation des Lamp-enstroms erreicht werden.

An Stelle der Intensitätsmodulation kann aber auch eine Modulation mit dem Filter allein (ohne Chopper) erreicht werden: eine kleine Vibration um die Arbeitsposition der gewählten Wellenlänge führt zu einem wellenlängenmodulierten Signal. Mißt man das Signal am Lock-In-Verstärker nur mit der doppelten Referenzfrequenz, so erhält man ein Signal, das proportional zur Ableitung des Absorptionsspektrums und damit auch konzentrationsproportional ist. Auf diese Weise kann auch ohne Chopper gearbeitet werden und eine größere Unempfindlichkeit bezüglich der Drift der Basislinie und des Rauschanteils erreicht werden.

Bei Mikroskopen ohne eigenen Photometerkopf übernimmt eine Blende im Detektor die Begrenzung des bildseitigen Meßflecks.

Figur 2 zeigt als Einfachversion für Standardmikroskope mit Durchlichtbeleuchtung 2 ohne Photometerkopf ein komplettes Modul 7 aus Monochromator, Chopper, Meßfeldblende und NIR-Detektor am Kameraausgang des Mikroskops.

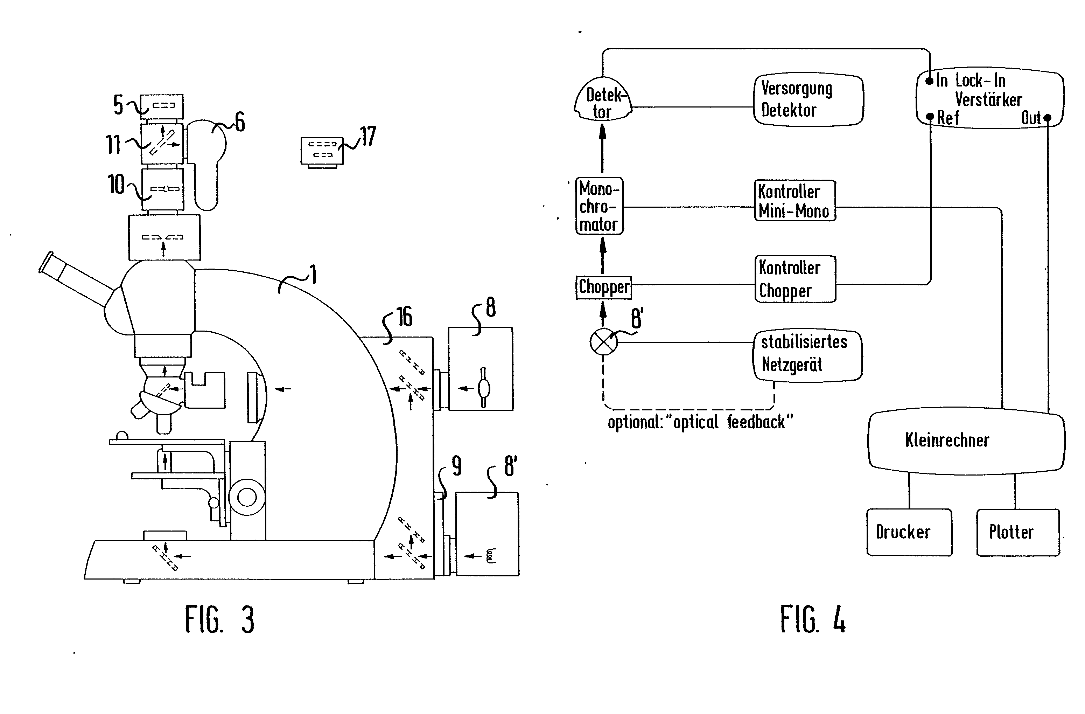

Figur 3 zeigt einen im Bereich der Kohle- und Sedimentmikroskopie bekannten Mikroskop-Photometermeßplatz mit Fluoreszenzbeleuchtung mit Anpassung an NIR-Absorptionsmessungen gleichzeitig mit der Vitrinitreflexionsbestimmung, bei dem bildseitig ein Photometerkopf mit variabler Meßfeldblende montiert ist. Dieser umfaßt eine UV-Auflichtlampe 8 für die Fluoreszenzbeobachtung sowie eine Halogenlampe 8', welche über das Schaltspiegelhaus 16 zur Durchlicht-und Auflichtbeleuchtung dient und vom Chopper 9 moduliert wird. Der Photometerkopfausgang ist. mit einem Monochromator 10 versehen, an den über einen Strahlteiler 11 (oder Klappspiegel) ein NIR-Detektor 5 sowie ein Photomultiplyer 6 anschließen. Der Photomultiplyer dient zur Messung der Vitrinitreflexion.

Alternativ zur Kombination aus Strahlteiler 11, NIR-Detektor 5 und Photomultiplyer 6 kann ein kombinierter Detektor 17 verwendet werden, der aus einem Si-Diode/PbS-Zelle-Sandwich-Detektor besteht. Die statt des Photomultiplyers vorgesehene Si-Diode mißt die Vitrinitreflexion, was trotz der geringeren Empfindlichkeit durch Lock-In-Meßtechnik ermöglicht wird. Gleichzeitig schützt sie die gegen UV und sichtbares Licht empfindliche PbS-Zelle, indem sie nur NIR-Strahlung durchläßt. Die Selektion der für die Vitrinitreflexion erforderlichen Wellenlänge von 546 nm erfolgt durch ein in den Strahlengang einschaltbares Filter. Bei geeig neter Herstellung des Filters im Monochromator 10 kann dieser auch diese Funktion übernehmen.

Figur 4 zeigt ein Schaltungsschema für Versorgung und Steuerung des erfindungsgemäßen Mikroskopphotometers mit angeschlossener Signalverarbeitung: Die Halogenlampe 8 wird von einem hochstabilisierten Netzgerät versorgt, wie es für Vitrinitreflexionsmeßplätze üblich ist. Wahlweise kann das Netzgerät zur Erhöhung der Lampenstabilität mit einem Eingang für einen optischen Meßfühler versehen sein, mit dessen Hilfe die optische Lichtabgabe der Lampe konstant gehalten wird.

Der Chopper wird über einen Kontroller hochkonstant auf einer Chop-Frequenz gehalten, die kein Vielfaches der Netzfrequenz oder anderer niederfrequenter Störungen sein soll. Vorzugsweise entspricht der Betrag einer Primzahl. Im Testaufbau wurden für den gekühlten PbS-Detektor als Chop-Frequenz 141 Hz verwendet, für Raumtemperaturdetektoren erwies sich 523 Hz als günstig. Vom Kontroller wird ein Referenzsignal an den frequenz- und phasenempfindlichen Verstärker (Lock-In-Verstärker) abgegeben.

Der Miniatur-Monochromator wird weiter unten beschrieben. Die gewünschte Wellenlänge wird elektrisch über einen Kontroller eingestellt, der von einem Kleinrechner angesteuert wird.

·Der Detektorkopf wird über ein Versorgungsmodul mit Spannung für den internen Vorverstärker sowie Strom für die elektrische Peltierkühlung versorgt. Der Wechselspannungsanteil des NIR-Meßsignals wird dem Lock-In-Verstärker zugeführt und dort in fester Frequenz- und Phasenbeziehung zur Chop-Frequenz (Referenzsignal) verstärkt. Andere nicht frequenz-und phasensynchrone Signale werden vom Lock-In-Verstärker unterdrückt. Diese Anordnung verhindert Falschlichteinfluß durch Umgebungslicht (das Mikroskop ist optisch "offen"), so daß ohne Abdunklung gemessen werden kann, und reduziert andere Störsignale wie Detektorrauschen etc.

Der Kleinrechner übernimmt die Ansteuerung des Monochromators, die Meßwertaufnahme sowie die Meßwertauswertung. Die Ergebnisse können dann auf einem Plotter sowie einem Drucker dargestellt werden.

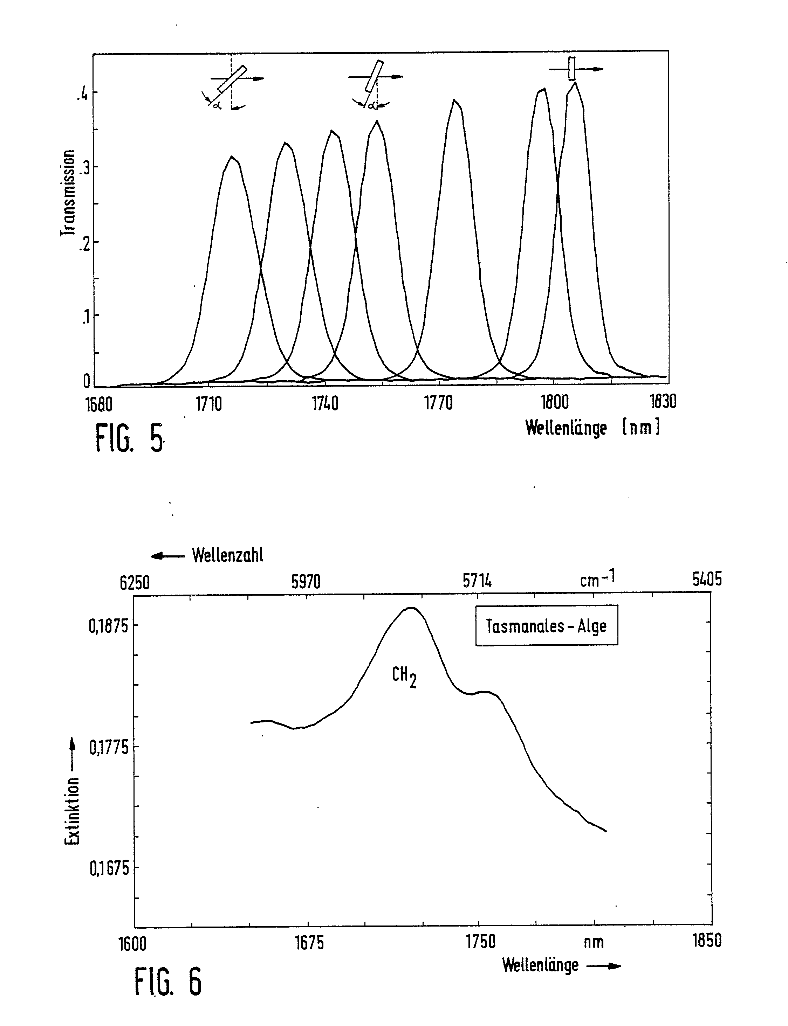

Als Monochromator, der insbesondere bei Anordnung in der Bildebene oder einer dazu konjugierten Ebene besonders klein ausgeführt werden kann und daher im nachfolgenden als "Miniatur-Monochromator" bezeichnet wird, dient ein speziell angefertigtes Interferenzfilter, das sowohl im Beleuchtungs- wie auch im bildseitigen Strahlengang eingesetzt werden kann. Durch Veränderung des Winkels dieses Interferenzfilters zum Strahlengang von 90° bis 0° wird die Durchlaßkurve desselben geändert, wie in Figur 5 für C-H-Aborptionsmessungen angedeutet ist, die unterschiedliche Durchlaßkurven für unterschiedliche Winkelstellungen des Filters zeigt. Wie man sieht, wird die maximale Durchlässigkeit mit zunehmender Verkippung ($\alpha$) gegenüber der Senkrechtstellung zu kürzeren Wellenlängen hin verschoben. (Bei $\alpha$ = 90° ist das Filter aus dem Strahlengang geschwenkt und es können dann in konventioneller Weise Beobachtungen unter normalem (Weiß) licht in Transmission oder Reflexion durchgeführt werden.)

Figur 6 zeigt eine NIR-Absorptionskurve für fossile Algen, die in der Erdölexploration von Bedeutung sind. Diese Kurve wurde mit einem Interferenzfilter mit einem Durchlaßmaximum in senkrechter Stellung von 1800 nm und einer mittleren Bandbreite von etwa 12 nm aufgenommen, wobei durch Verkippen des Filters ein Spektralbereich von etwa 1650 bis 1800 nm abgefragt werden konnte.

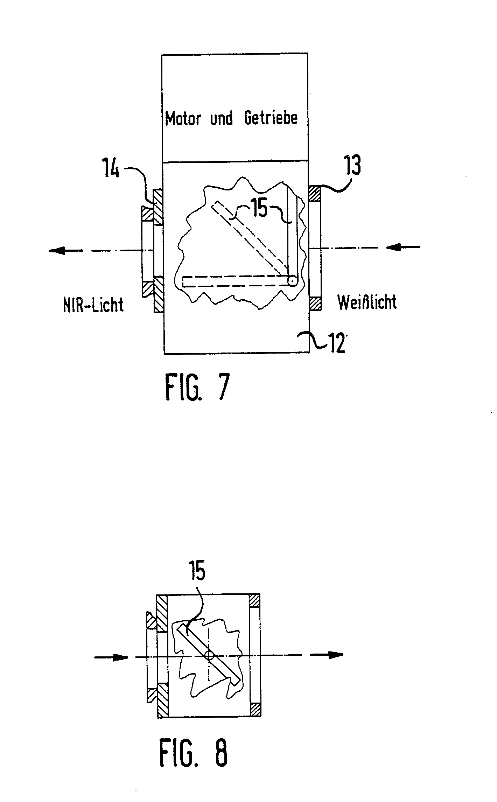

Wie Figuren 7 und 8 zeigen, hat ein solcher Monochromator ein etwa würfelförmiges Gehäuse 12 mit zwei einander gegenüberliegenden Öffnungen 13, 14, die mit mechanischen Adaptern für das jeweilige Mikroskop versehen sind. Im Inneren des Gehäuses befindet sich ein drehbar gelagertes (und je nach Verwendungszweck - d. h. Lage der Absorption - auswechselbares) Interferenzfilter 15, das über ein nicht näher gezeigtes spielfreies mechanisches Untersetzungsgetriebe von einem 5-Phasen-Schrittmotor angetrieben wird. Der Schrittmotor wird über den Kontroller im Halbschrittbetrieb angesteuert (1000 Schritte pro Umdrehung). Zusammen mit der 1 : 100 Getriebeuntersetzung wird so eine Positionsgenauigkeit von etwa einer Winkelminute erreicht, wie sie für Kippwinkel von 0 bis 45° und größer bei einer Feinabstimmung des Monochromators notwendig ist.

An Stelle des erwähnten Schrittmotors mit Getriebe kann ein Mikroschrittantrieb ohne Getriebe, ein Galvanometer-Drehantrieb, ein Piezoelement oder ein andere Vorrichtung zur präzisen Drehung des Filters (mit entsprechendem Kontroller) eingesetzt werden.

Der Zusammenhang zwischen Kippwinkel und Durchlaßwellenlänge ist nichtlinear. Er wird mit einem herkömmlichen externen Spektrometer für jedes Filter individuell bestimmt und als Punktetabelle dem Kleinrechner eingegeben (mit anschließender Interpolationsmöglichkeit zwischen gemessenen Werten). Zur visuellen Beobachtung im Weißlicht kann das Filter ganz aus dem Strahlengang geschwenkt werden, weshalb diese Bauform (Figur 7) speziell für die beleuchtungsseitige Montage interessant ist.

Figur 8 zeigt eine mögliche Bauform für einen bildseitigen Monochromator, bei dem kein freier Durchgang des Monochromators erforderlich ist. Diese Bauform kann extrem klein gebaut werden (Filtergröße < 10 mm Durchmesser).

Dem Nachteil der eng betrenzten Bandbreite von etwa 60 bis 150 nm dieses Miniaturmonochromators steht der gerade in der Mikroskop-Spektralphotometrie unerhört wichtige Vorteil des großen geometrischen Lichtleitwertes (im Vergleich zu üblichen Gittermonochromatoren) gegenüber, der nicht durch das Öffnungsverhältnis wie beim Gittermonochromator, sondern durch das Mikroskop selbst bestimmt wird, so daß bei gleicher Bandbreite ein etwa um den Faktor 10 größerer Lichtwert erreicht wird.

Mit der gezeigten Anordnung kann insbesondere die mikroskopische Transmission von Dünnschliffen bzw. Mikrotomschnitten im Bereich des ersten C-H-Obertons bei etwa 1,7 μm gemessen und je nach Fragestellung aus dem spektralen Verlauf der Extinktion auf Art und Menge des organischen Materials geschlossen werden. Organische Materialien auf Halbleitern wie z. B. Siliciumwafern können wegen der NIR-Transparenz der Wafer auch in Transmission erfaßt werden. In Auflicht-Reflexion ist das nur bei spiegelnden Unterlagen möglich (z. B. bei Lackierungen auf Autoblechen).

Das Meßverfahren basiert prinzipiell darauf, daß die Absorption bzw. Extinktion der Probe wie bei makroskopischen Messungen auch durch Anwendung des Lambert-Beer-Gesetzes bestimmt wird: $T = I/I_0 = \exp(-Kd)$

mit:    T Transmission

I Intensität der Probe

$I_0$ Intensität der Referenz (z. B. Glasträger)

d Schichtdicke des organischen Materials

K Extinktionsmodul, ($K = k\alpha$)

k Konzentration

$\alpha$ spezifischer Extinktionskoeffizient

Da aber die Schichtdicke nicht oder nur mit großem Aufwand bestimmbar ist, wird nicht die absolute Konzentration, sondern nur eine der Konzentration proportionale, dickenunabhängige Größe $\Omega$ bestimmt, die aus der Normierung auf eine "Grundextinktion" gewonnen wird:

$\Omega = K(\digamma) / K(\digamma_0)$

$\ln ( I/T(\digamma) ) = K(\digamma)d$.

$\ln ( I/T(\digamma_0) ) = K(\digamma_0)d$ mit $\digamma_0$ Wellenlänge vor der Absorption.

z.B. 1650 nm

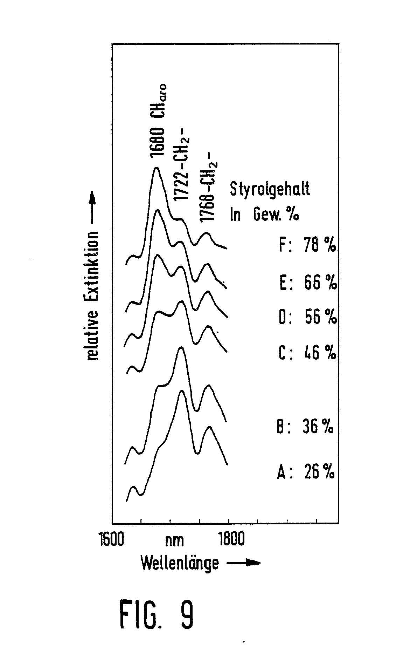

Dieses Verfahren ist insbesondere bei Überprüfung einer bestimmten begrenzten Probengesamtheit sinnvoll, z. B. bei der Überprüfung der Zusammensetzungen von unterschiedlichen Copolymeren aus Styrol und einem rein aliphatischen Monomeren (Fig. 9), bei denen relative Angaben wie die integrale relative Extinktion verschiedener Proben über den C-H-Absorptionsbereich ausreichen.

## Ansprüche

1. Verfahren zur photometrischen Bestimmung von organisch-chemischem Material in Mikrobereichen von ≥ 5 μm Meßfleckgröße einer Probe, durch Absorptionsmessung in einem Mikroskopphotometer in Transmission oder Reflexion, **dadurch gekennzeichnet,** daß man die Absorption mit hoher Rauschunterdrückung im Wellenlängenbereich von 1600 bis 1800 nm und/oder 1400 bis 1600 nm ermittelt.

2. Verfahren nach Anspruch 1, **dadurch gekennzeichnet,** daß man die Absorption in Lock-In-Technik ermittelt.

3. Mikroskopphotometer zur Durchführung des Verfahrens nach Anspruch 1 oder 2 enthaltend ein Lichtmikroskop (1) mit Monochromator (4), photometrischer Meßeinrichtung und mit Auflicht- und/oder Durchlichtbeleuchtung zur Reflexions- und/oder Transmissionsmessung, **gekennzeichnet durch** eine Lichtquelle (2; 3) mit hoher Leistungsdichte im nahen Infrarot von > 1000 nm Wellenlänge (NIR), eine im NIR durchlässige Optik und einen rauscharmen NIR-Detektor (5).

4. Mikroskopphotometer nach Anspruch 3, **dadurch gekennzeichnet,** daß der Monochromator durch ein Interferenzfilter (15) gebildet wird, das senkrecht zum Strahlengang ein Durchlaßmaximum bei ca. 1800 nm, ca. 2000 nm oder bei 1600 nm und eine mittlere Bandbreite von ≤20 nm hat und mit Einrichtungen zur Veränderung seines Winkels im Strahlengang zwischen 0 und 90° versehen ist.

5. Mikroskopphotometer nach Anspruch 4, **dadurch gekennzeichnet,** daß das Interferenzfilter eine mittlere Bandbreite von 10 nm hat.

6. Mikroskopphotometer nach Anspruch 4 oder 5, **dadurch gekennzeichnet,** daß der Monochromator (4) in der Bildebene oder in einer dazu konjugierten Ebene angeordnet ist.

7. Mikroskopphotometer nach einem der Ansprüche 4 bis 6, **gekennzeichnet durch** einen spielfreien mechanischen Drehantrieb mit einer Einstellgenauigkeit von ≤ 5 Winkelminuten, insbesondere von ca. 1 Winkelminute, als Einrichtung zur Veränderung des Interferenzfilterwinkels.

8. Mikroskopphotometer nach Anspruch 7, **dadurch gekennzeichnet,** daß der Drehantrieb durch einen 5-Phasen-Schrittmotor mit Untersetzungsgetriebe für eine Schrittfolge von größenordnungsmäßig 1000 Schritt/Umdrehung gebildet wird.

9. Mikroskopphotometer nach einem der Ansprüche 3 bis 8,

**gekennzeichnet durch**

einen Lichtchopper (9) im Strahlengang vor dem Detektor (5).

10. Mikroskopphotometer nach einem der Ansprüche 3 bis 9,

**gekennzeichnet durch**

eine Halogenlampe (2, 3) als Lichtquelle.

11. Mikroskopphotometer nach einem der Ansprüche 3 bis 10,

**gekennzeichnet durch**

einen Kleinrechner zur Berücksichtigung der winkelabhängigen Durchlaßcharakteristik des Monochromators (4).

12. Mikroskopphotometer nach einem der Ansprüche 4 bis 11,

**gekennzeichnet durch**

eine frequenz- und phasenempfindliche Verstärkung (Lock-In-Technik) mit Lichtchopper oder wellenlängenmodulierender Interferenzfilter-Vibration, Detektor und Lock-In-Verstärkung.

13. Mikroskopphotometer nach einem der Ansprüche 3 bis 12,

**gekennzeichnet durch**

einen Strahlteiler (11) am bildseitigen Ausgang mit anschließendem NIR-Detektor (5) einerseits und Photomultiplyer (6) für Vitrinitreflexionsmessung andererseits.

14. Mikroskopphotometer nach einem der Ansprüche 3 bis 12,

**gekennzeichnet durch**

einen kombinierten Detektor (17) aus Si-Diode und PbS-Zelle mit wahlweiser Ausfilterung für NIR-Transmission und Vitrinitreflexion.

15. Aufsatz für Lichtmikroskope zur Durchführung des Verfahrens nach Anspruch 1 oder 2,

**gekennzeichnet durch**

einen am bildseitigen Ausgang des Mikroskops (1) anzubringenden Modul (7) aus Monochromator (4), Chopper (9) oder Wellenlängenmodulation, Meßfeldblende und NIR-Detektor (5).

16. Monochromator für Lichtmikroskopie,

**gekennzeichnet durch**

ein Interferenzfilter (15) oder einen Interferenzfiltersatz mit Einrichtungen zum Filterwechsel und durch Einrichtungen zur Veränderung des Winkels des in den Strahlengang gebrachten Filters zwischen 0 und 90°.

FIG. 1

FIG. 2

EP 0 299 422 A2

FIG. 3

FIG. 4

EP 0 299 422 A2

FIG. 5

FIG. 6

Motor und Getriebe

14

13

15

NIR-Licht

Weißlicht

12

## FIG. 7

15

## FIG. 8

FIG. 9